# EUROPEAN PATENT SPECIFICATION

(11) **EP 1 947 898 B1**
(45) Date of publication and mention of the grant of the patent: **28.10.2009**
(21) Application number: 08000862.6
(22) Date of filing: 17.01.2008
(51) Int. Cl.: H04Q 11/04, H04Q 3/00

(54) **Method, system and apparatus for overload control**
Verfahren, System und Vorrichtung zur Überlastkontrolle
Procédé, système, et appareil pour contrôle de surcharge

(30) Priority: 22.01.2007 CN 200710007896; 15.10.2007 WO PCT/CN2007/070897
(43) Date of publication of application: 23.07.2008
(73) Proprietor: Huawei Technologies Co., Ltd., Longgang District, Shenzhen Guangdong 518129 (CN)
(72) Inventor: Zhou, Shiyong, Shenzhen, Guangdong 518129 (CN); Li, Xiaoshuang, Shenzhen, Guangdong 518129 (CN)
(74) Representative: Manitz, Finsterwald & Partner GbR

(56) References cited:
- EP-A- 0 936 835
- EP-A2- 0 487 235
- KR-A- 20010 002 107

## Description

### Field of the Invention

The present invention relates to the communication field, and particularly, to the overload control technology.

### Background of the Invention

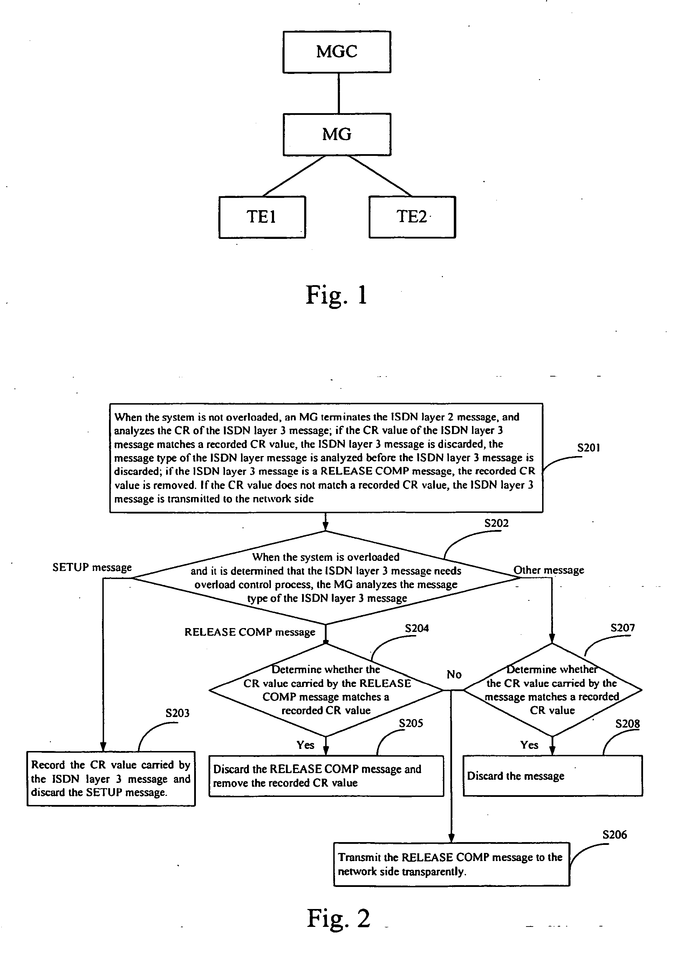

At present, the Integrated Services Digital Network (ISDN) is applied by many operators. Referring to Figure 1, the network architecture of the ISDN includes Terminal Equipment (TE), a Media Gateway (MG) and a Media Gateway Controller (MGC).

According to an access rate, the channel between the TE and the MG may include a Basic Rate Access (BRA) channel, a Digital Access Signaling System 2 (DASS2) channel, a Primary Rate Access (PRA) channel, a Digital Private Network Signaling System No.1 (DPNSS1) channel and a Q signaling and standard PRA application (QSIG) channel. The BRA channel and the PRA channel are used for transmitting the ISDN control signaling or data of a call. The ISDN control signaling is divided into three layers.

In general networking applications, the MG does not analyze the message type of the ISDN layer 3 message but terminates the ISDN layer 2 message, and transmits the ISDN layer 3 message to the MGC transparently via the ISDN Q.921 User Adaptation (IUA) protocol.

The larger the traffic is, the larger the load of the MG is. If the traffic is not controlled, the system is unable to respond to the service requirement of a user in time and may be instable easily. Therefore, it is necessary to control service messages when the system is overloaded to reduce the load of devices in time.

A first conventional technology associated with the present invention provides an overload control method, which includes: when the MG is overloaded, the MG transmits a layer 2 Receive Not Ready (RNR) message to each TE to inform the TE that the MG is busy; after receiving the layer 2 RNR message, the TE suspends the transmission of all call signalings; after receiving a layer 2 Receiver Ready (RR) message, the TE starts the transmission. In this way, the load of the system is reduced.

In accordance with the first conventional technology, after receiving the RNR message, the TE suspends the transmission of all messages, releases calls which have accessed the TE, and informs the MGC to perform corresponding release processing via a call release message. In this way, if the overload time of the MG is too long and the MGC is unable to process the call release message of the TE in time, the state information recorded by the MGC may be different from that recorded by the TE.

A second conventional technology associated with the present invention provides another overload control method, which includes: when the MG is overloaded, the MG discards all received ISDN call signaling messages.

The second conventional technology discards a newly received ISDN call message without determining the content of the newly received ISDN call message. As a result, the state information recorded by the MGC may be different from that recorded by the TE. For example, when the message discarded by the MG is a call release message, the bill recorded by the MGC will be different from that recorded by the TE.

EP-A-0 936 835 discloses that: the intelligence for handling the signaling on lines operates at a higher layer of the signaling protocol than the data path, and needs only to look for call set-ups and releases. Only if the adapter approaches or reaches overload (on a route or as a whole) will it react to new calls on the affected routes forcing the new calls to clear. The adapter needs to terminate the message transfer part (MTP) layer of ITU signaling system number seven (SS7) so that it can react to the signaling when necessary. Signaling is terminated, monitored and normally re-transmitted again. Releases of circuits are monitored to clear activity indications and set-ups for overload. In the event of an overload the adapter will send a release back indicating congestion.

KR 2001 0002107 A discloses a method for controlling overload of a signal processing apparatus, which includes: at the MTP Level 3 information processing part, detecting the overload state of a No.7 signal processing apparatus with a prescribed time unit; the MTP Level 3 information processing part outputs an overload state signal with TRC if the No.7 signal processing apparatus is overloaded, and outputs an overload information report with SCCP, ISUP and TUP; after receiving the overload information report, the TCP identifies a phase of overload state on the user computer with the user connection processor; the SCCP, ISUP and TUP discard quantitative IAM information phase.

### Summary of the Invention

Embodiments of the present invention provide a method, and apparatus for overload control so as to perform control processing for a call message and guarantee the consistency of the state information recorded at the TE side and the MGC side when the system is overloaded.

A method for overload control includes:
analyzing a message type of an Integrated Services Digital Network (ISDN) layer 3 message arriving at a Media Gateway (MG) and a Call Reference (CR) value carried by the ISDN layer 3 message;
performing filter control for the ISDN layer 3 message according to a CR value record and the message type and the CR value acquired by analyzing.

An apparatus for overload control includes:
a message type analyzing unit, configured to analyze a message type of an Integrated Services Digital Network (ISDN) layer 3 message and a Call Reference (CR) value carried by the ISDN layer 3 message;
an overload controlling unit, configured to perform filter control for the ISDN layer 3 message according to a CR value record and the message type and the CR value acquired by the message type analyzing unit.

As can be seen from the detailed implementation provided by the embodiments of the present invention, when the system is overloaded and needs overload control process, a Call Reference (CR) value of a call needing to be filtered is recorded and the message type of the ISDN layer 3 message which arrives at the MG and is associated with the call needing to be filtered is analyzed, and filter control for the ISDN layer 3 message is performed according to the Call Reference (CR) value and the message type acquired by analyzing. Alternatively, the message type of the ISDN layer 3 message is analyzed, the CR value is recorded, and the filter control for the ISDN layer 3 message arriving at the MG is performed. Therefore, it is possible to guarantee the consistency of the state information recorded at the TE side and the MGC side.

### Brief Description of the Drawings

Figure 1 is a schematic diagram illustrating the networking architecture of a conventional ISDN network.
Figure 2 is a flowchart illustrating a method for overload control in accordance with an embodiment of the present invention.
Figure 3 is a flowchart illustrating a method for overload control in accordance with another embodiment of the present invention.
Figure 4 is a structure diagram illustrating an apparatus for overload control in accordance with an embodiment of the present invention.
Figure 5 is a structure diagram illustrating an apparatus for overload control in accordance with another embodiment of the present invention.

### Detailed Description of the Invention

In the prior art, an ISDN layer 3 message is not analyzed and a CR value carried by the ISDN layer 3 message is not recorded, but the ISDN layer 3 message is discarded or transmitted transparently. To guarantee the consistency of state information recorded by an MG and an MGC, the operations for the ISDN layer 3 message, such as analyzing the message type of the ISDN layer 3 message, matching or recording the CR value carried by the ISDN layer 3 message, are performed using a proper method at an appropriate time. The operation of matching the CR value carried by the ISDN layer 3 message is performed according to a CR value record. In the embodiments of the present invention, two methods for recording a CR value and corresponding overload control methods performed according to the recorded CR value are provided, which will be thereinafter described respectively with respect to a first embodiment and a second embodiment.

The first embodiment of the present invention illustrates an overload control method, which includes: a CR value of a call is recorded by an MG when the system is overloaded, an ISDN layer 3 message arriving at the MG is filtered if a CR value carried by the ISDN layer 3 message matches the CR value recorded by the MG which corresponds to the call needing to be filtered out or discarded, and the ISDN layer 3 message is transparently transmitted if the CR value carried by the ISDN layer 3 message does not match the CR value recorded by the MG. In this way, the number of initiated calls may be controlled so as to implement the overload control of the system. Figure 2 shows the detailed process.

Block S201: When the system is not overloaded, an MG receives an ISDN message from TE. If the ISDN message is an ISDN layer 2 message, the ISDN layer 2 message is terminated; if the ISDN message is an ISDN layer 3 message, the CR value of the ISDN layer 3 message is analyzed. If the CR value of the ISDN layer 3 message matches a recorded CR value, the MG discards the ISDN layer 3 message. Further, the MG analyzes the message type of the ISDN layer 3 message before discarding the ISDN layer 3 message; if the ISDN layer 3 message is a RELEASE COMP message, the MG removes the recorded CR value. If the CR value does not match a recorded CR value, the MG transmits the ISDN layer 3 message to the network side, e.g., an MGC.

The above S201 is a preferred mode. In another case, the MG may receive the ISDN message from the TE when the system is not overloaded, terminate the ISDN layer 2 message, carry and transmit the ISDN layer 3 message transparently without performing any processing for the ISDN layer 3 message.

Block S202: When the system is overloaded and a configured overload determining logic of the MG determines that the ISDN layer 3 message arriving at the MG needs overload control process, the MG analyzes the message type of the ISDN layer 3 message.

If the ISDN layer 3 message is a SETUP message, Block S203 is performed. Specifically, the CR value carried by the ISDN layer 3 message is recorded and the SETUP message is discarded.

If the ISDN layer 3 message is a RELEASE COMP message, Block S204 is performed. Specifically, it is determined whether the CR value carried by the RELEASE COMP message matches a recorded CR value; if the CR value carried by the RELEASE COMP message matches a recorded CR value, Block S205 is performed, i.e., the RELEASE COMP message is discarded and the recorded CR value is removed; otherwise, Block S206 is performed, i.e., the RELEASE COMP message is transmitted to the network side transparently, e.g., an MGC.

If the ISDN layer 3 message is not the SETUP message or the RELEASE COMP message, Block S207 is performed. Specifically, it is determined whether the CR value carried by the message matches a recorded CR value; if the CR value carried by the message matches a recorded CR value, Block S208 is performed, i.e., the message is discarded; otherwise, Block S206 is performed, i.e., the message is transmitted to the network side transparently, e.g., an MGC.

By the above overload control process, the normal processing of messages is resumed after the system is recovered.

In the first embodiment provided by the present invention, a timer may also be set in the MG After receiving the SETUP message, the MG initiates the timer. If a RELEASE COMP message which carries the same CR value as that carried by the SETUP message is received before the timer expires, it is determined that this call is over, and the timer is reset and the processing of subsequent messages carrying the same CR value is terminated, i.e. the recorded CR value is removed. The detailed implementation is the same as that described in Block S204, which will not be further described herein. If no RELEASE COMP message carrying the same CR value is received before the timer expires, the recorded CR value is removed when the timer expires.

In the first embodiment, when the system is not overloaded, the MG may not analyze the message type of the ISDN layer 3 message but determines whether the CR value carried by the ISDN layer 3 message matches a recorded CR value. If the CR value carried by the ISDN layer 3 message matches a recorded CR value, the MG discards the message. Further, the MG analyzes the message type of the ISDN layer 3 message before discarding the ISDN layer 3 message; if the ISDN layer 3 message is a RELEASE COMP message, the recorded CR value is removed. If the CR value carried by the ISDN layer 3 message does not match a recorded CR value, the ISDN layer 3 message is transmitted transparently.

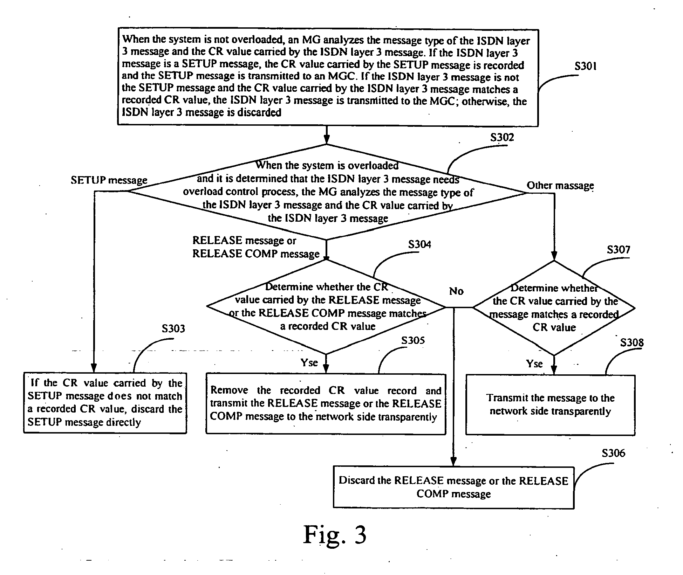

The second embodiment provided by the present invention illustrating an another overload control method, which includes: recording a CR value when the system is not overloaded, analyzing the message type of an ISDN layer 3 message by the MG, filtering the ISDN layer 3 message if the CR value carried by the ISDN layer 3 message does not match the recorded CR value, and transparently transmitting the ISDN layer 3 message if the CR value carried by the ISDN layer 3 message matches the CR value, so as to control the number of initiated calls and implement the overload control of the system. Figure 3 shows the detailed process.

Block S301: When the system is not overloaded, an MG receives an ISDN message from TE. If the ISDN message is an ISDN layer 2 message, the ISDN layer 2 message is terminated; if the ISDN message is an ISDN layer 3 message, the message type of the ISDN layer 3 message and the CR value carried by the ISDN layer 3 message is analyzed. If the ISDN layer 3 message is a SETUP message, the CR value carried by the SETUP message is recorded and the SETUP message is transmitted to the network side, e.g., an MGC. If the ISDN layer 3 message is not the SETUP message and the CR value carried by the ISDN layer 3 message matches a recorded CR value, the ISDN layer 3 message is transmitted to the network side, e.g., an MGC; otherwise, the ISDN layer 3 message is discarded.

The above S301 is a preferred mode. In another case, the MG may receive the ISDN message from the TE when the system is not overloaded, terminate the ISDN layer 2 message, carry and transmit the ISDN layer 3 message transparently without performing any further processing for the ISDN layer 3 message.

Block S302: When the system is overloaded and a configured overload determining logic of the MG determines that the ISDN layer 3 message arriving at the MG needs overload control process, the MG analyzes the message type of the ISDN layer 3 message and the CR value carried by the ISDN layer 3 message.

If the ISDN layer 3 message is a SETUP message, Block S303 is performed. Specifically, if the CR value carried by the SETUP message does not match a recorded CR value, the SETUP message is discarded directly.

If the ISDN layer 3 message is a RELEASE message or a RELEASE COMP message, Block S304 is performed. Specifically, it is determined whether the CR value carried by the RELEASE message or the RELEASE COMP message matches a recorded CR value. If the CR value carried by the RELEASE message or the RELEASE COMP message matches a recorded CR value, Block S305 is performed, i.e., the recorded CR value is removed and the RELEASE message or the RELEASE COMP message is transmitted to the network side transparently. If the CR value carried by the RELEASE message or the RELEASE COMP message does not match a recorded CR value, Block S306 is performed, i.e., the RELEASE message or the RELEASE COMP message is discarded.

If the ISDN layer 3 message is not the SETUP message or the RELEASE message or the RELEASE COMP message, Block S307 is performed. Specifically, it is determined whether the CR value carried by the ISDN layer 3 message matches a recorded CR value. If the CR value carried by the ISDN layer 3 message matches a recorded CR value, Block S308 is performed, i.e., the ISDN layer 3 message is transmitted to the network side transparently. If the CR value carried by the ISDN layer 3message does not match a recorded CR value, Block S306 is performed, i.e., the ISDN layer 3 message is discarded.

In the second embodiment, when the system is overloaded, the MG may not analyze the message type of the ISDN layer 3 message but determines whether the CR value carried by the ISDN layer 3 message matches a recorded CR value. If the CR value carried by the ISDN layer 3 message matches a recorded CR value, the ISDN layer 3 message is transmitted to the network side transparently, e.g., an MGC. If the CR value carried by the ISDN layer 3 message does not match a recorded CR value, the ISDN layer 3 message is discarded. Further, the message type of the ISDN layer 3 message is analyzed before the ISDN layer 3 message is discarded; if the ISDN layer 3 message is a RELEASE message or a RELEASE COMP message, the recorded CR value is removed.

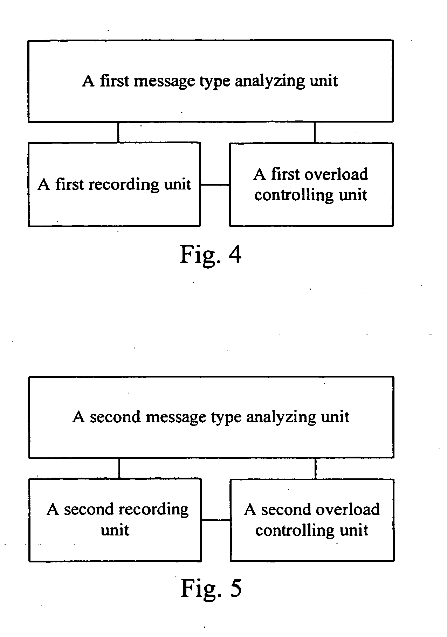

Corresponding to the first embodiment provided by the present invention, a third embodiment provided by the present invention illustrates an overload control apparatus. As shown in Figure 4, the structure of the apparatus includes: a first message type analyzing unit, a first recording unit and a first overload controlling unit.

The information is transmitted between these units as follows.

The first message type analyzing unit is used for analyzing the message type of an ISDN layer 3 message arriving at the first message type.

The first recording unit is used for recording a CR value corresponding to this call when the first message type analyzing unit determines that the ISDN layer 3 message is a SETUP message in the case that the system needs overload control process.

The first overload controlling unit is used for performing filter control for the ISDN layer 3 message according to the CR value recorded by the first recording unit and the message type of the ISDN layer 3 message acquired by the first message type analyzing unit.

If the ISDN layer 3 message is a SETUP message and it is determined that the CR value carried by the SETUP message matches a recorded CR value, the SETUP message is discarded.

If the ISDN layer 3 message is a RELEASE COMP message, it is determined whether the CR value carried by the RELEASE COMP message matches a recorded CR value. If the CR value carried by the RELEASE COMP message matches a recorded CR value, the RELEASE COMP message is discarded and the recorded CR value is removed.

If the ISDN layer 3 message is not the SETUP message or the RELEASE COMP message, it is determined whether the CR value carried by the ISDN layer 3 message matches a recorded CR value. If the CR value carried by the ISDN layer 3 message matches a recorded CR value, the ISDN layer 3 message is discarded.

In the third embodiment provided by the present invention, if the ISDN layer 3 message is a SETUP message, the first recording unit may also initiate a timer corresponding to this call when recording the CR value corresponding to this call. In this way, the first overload controlling unit may monitor the timer. If the ISDN layer 3 message which is received before the timer expires is a RELEASE COMP message, the first overload controlling unit determines whether the CR value carried by the RELEASE COMP message matches a recorded CR value. If the CR value carried by the RELEASE COMP message matches a recorded CR value, the RELEASE COMP message is discarded, the recorded CR value is removed, and the timer is reset. If no ISDN layer 3 message which is a RELEASE COMP message is received until the timer expires, the first overload controlling unit removes the recorded CR value.

In the third embodiment provided by the present invention, when the system is not overloaded, the first message type analyzing unit may not analyze the message type of the ISDN layer 3 message, and the first overload controlling unit determines whether the CR value carried by the ISDN layer 3 message matches a recorded CR value. If the CR value carried by the ISDN layer 3 message matches a recorded CR value, the ISDN layer 3 message is discarded and the first message type analyzing unit is triggered to analyze the message type of the ISDN layer 3 message before the ISDN layer 3 message is discarded. If the message is a RELEASE COMP message, the corresponding recorded CR value is removed. If the CR value carried by the ISDN layer 3 message does not match a recorded CR value, the ISDN layer 3 message is transparently transmitted.

Corresponding to the second embodiment provided by the present invention, a fourth embodiment provided by the present invention illustrates another overload control apparatus. As shown in Figure 5, the structure of the apparatus includes: a second message type analyzing unit, a second recording unit and a second overload controlling unit.

The information is transmitted between these units as follows.

The second message type analyzing unit is used for analyzing the message type of an ISDN layer 3 message arriving at the second message type analyzing unit.

The second recording unit is used for recording a CR value corresponding to this call when the message type analyzing unit determines that the ISDN layer 3 message is a SETUP message in the case that the system is not overloaded.

The second overload controlling unit is used for performing filter control for the ISDN layer 3 message according to the recorded CR value and the message type of the ISDN layer 3 message acquired by the second message type analyzing unit.

If the ISDN layer 3 message is a SETUP message and the CR value carried by the SETUP message does not match a recorded CR value, the SETUP message is directly discarded.

If the ISDN layer 3 message is a RELEASE message or a RELEASE COMP message, it is determined whether the CR value carried by the RELEASE message or the RELEASE COMP message matches a recorded CR value. If the CR value carried by the RELEASE message or the RELEASE COMP message does match a recorded CR value, the recorded CR value is removed and the RELEASE message or the RELEASE COMP message is transmitted to the network side transparently. If the CR value carried by the RELEASE message or the RELEASE COMP message does not match a recorded CR value, the RELEASE message or the RELEASE COMP message is discarded.

If the ISDN layer 3 message is not the SETUP message or the RELEASE message or the RELEASE COMP message, it is determined whether the CR value carried by the message matches a recorded CR value. If CR value carried by the SETUP message matches a recorded CR value, the SETUP message is transmitted to the network side transparently. If the CR value carried by the SETUP message does not match a recorded CR value, the SETUP message is discarded.

In the fourth embodiment, when the system is overloaded, the second overload controlling unit may also determine whether the CR value carried by the ISDN layer 3 message matches a recorded CR value. If the CR value carried by the ISDN layer 3 message matches a recorded CR value, the ISDN layer 3 message is transmitted to the network side transparently, e.g., an MGC. If the CR value carried by the ISDN layer 3 message does not match a recorded CR value, the ISDN layer 3 message is discarded, and the recorded CR value is removed after the ISDN layer 3 message is transparently transmitted.

A fifth embodiment provided by the present invention illustrates an overload control system corresponding to the first embodiment, which includes: a Media Gateway (MG) and a Media Gateway Controller (MGC).

When the system is overloaded, the MG analyzes the message type of an ISDN layer 3 message arriving at the MG, and records a CR value corresponding to this call if the ISDN layer 3 message is a SETUP message; alternatively, performs filter control for the ISDN layer 3 message sent to the MGC according to the recorded CR value and the message type of the ISDN layer 3 message.

If the ISDN layer 3 message is a SETUP message and it is determined that no recorded CR value matches the CR value carried by the SETUP message, the SETUP message is discarded.

If the ISDN layer 3 message is a RELEASE COMP message, it is determined whether the CR value carried by the RELEASE COMP message matches a recorded CR value. If the CR value carried by the RELEASE COMP message matches a recorded CR value, the RELEASE COMP message is discarded and the recorded CR value is removed.

If the ISDN layer 3 message is not the SETUP message or the RELEASE COMP message, it is determined whether the CR value carried by the message matches a recorded CR value. If the CR value carried by the message matches a recorded CR value, the message is discarded.

In the fifth embodiment provided by the present invention, if the ISDN layer 3 message is a SETUP message, the MG may also initiate a timer corresponding to this call when recording the CR value corresponding to this call. And then, the MG may monitor the timer. If the ISDN layer 3 message which is a RELEASE COMP message is received before the timer expires, the MG determines whether the CR value carried by the RELEASE COMP message matches a recorded CR value. If the CR value carried by the RELEASE COMP message matches a recorded CR value, the MG discards the REALEASE COMP message, removes the recorded CR value, and resets the timer. If no ISDN layer 3 message which is a RELEASE COMP message is received until the timer expires, the MG removes the recorded CR value.

In the fifth embodiment provided by the present invention, when the system is not overloaded, the MG may not analyze the message type of the ISDN layer 3 message but determines whether the CR value carried by the ISDN layer 3 message matches a recorded CR value. If the CR value carried by the ISDN layer 3 message matches a recorded CR value, the MG discards the ISDN layer 3 message. Further, the MG analyzes the message type of the ISDN layer 3 message before discarding the ISDN layer 3 message. If the message is a RELEASE COMP message, the MG removes the recorded CR value. If the CR value carried by the ISDN layer 3 message does not match a recorded CR value, the MG transmits the message transparently.

A sixth embodiment provided by the present invention illustrates another overload control system corresponding to the second embodiment, which includes: a Media Gateway (MG) and a Media Gateway Controller (MGC).

When the system is not overloaded, the MG analyzes the message type of an ISDN layer 3 message arriving at the MG If the ISDN layer 3 message is a SETUP message, the MG records a CR value corresponding to this call. When the system is overloaded, the MG performs filter control for the ISDN layer 3 message transmitted to the MGC according to the recorded CR value and the message type of the ISDN layer 3 message.

If the ISDN layer 3 message is a SETUP message and it is determined that the CR value of the ISDN layer 3 message does not match a recorded CR value, the ISDN layer 3 message is directly discarded.

Alternatively, if the ISDN layer 3 message is a RELEASE message or a RELEASE COMP message, it is determined whether the CR value carried by the message matches a recorded CR value. If the CR value carried by the message matches a recorded CR value, the recorded CR value is removed and the RELEASE message is transmitted to the network side transparently. If the CR value carried by the message matches a recorded CR value, the RELEASE message is discarded.

Alternatively, if the ISDN layer 3 message is not the SETUP message or the RELEASE message or the RELEASE COMP message, it is determined whether the CR value carried by the message matches a recorded CR value. If the CR value carried by the message matches a recorded CR value, the ISDN layer 3 message is transmitted to the network side transparently, e.g., an MGC. If the CR value carried by the ISDN layer 3 message does not match a recorded CR value, the ISDN layer 3 message is discarded.

In the sixth embodiment, when the system is overloaded, the MG may determine whether the CR value carried by the ISDN layer 3 message matches a recorded CR value. If the CR value carried by the ISDN layer 3 message matches a recorded CR value, the ISDN layer 3 message is transmitted to the network side transparently, e.g., an MGC. If the CR value carried by the ISDN layer 3 message does not match a recorded CR value, the ISDN layer 3 message is discarded, and the recorded CR value is removed after the ISDN layer 3 message is transparently transmitted.

As can be seen from the detailed implementation provided by the embodiments of the present invention, when the system is overloaded, the ISDN layer 3 message arriving at an MG is performed filter control according to the recorded CR value of the call needing to be filtered and the message type of the ISDN layer 3 message acquired by analyzing. Alternatively, the ISDN layer 3 message is performed filter control according to the recorded CR value of the call needing transparently transmitting and the message type of the ISDN message acquired by analyzing. Therefore, the solution of the present invention is able to implement the overload control and guarantee the consistency of the state information recorded at the TE side and the MGC side.

Obviously, those skilled in the art may make numerous changes and variations on the solution of the present invention without departing from the scope thereof. Accordingly, it is intended that the present invention includes the changes and variations in case that such changes and variations come within the scope as set forth in the appended claims and the equivalent techniques thereof.

## Claims

1. A method for overload control, **characterized in that** the method comprises:
analyzing (202) (302) a message type of an Integrated Services Digital Network , ISDN, layer 3 message arriving at a Media Gateway, MG, and a Call Reference, CR, value carried by the ISDN layer 3 message;
performing (203-208) (303-308) filter-control for the ISDN layer 3 message according to a CR value record and the message type and the CR value acquired by analyzing.

2. The method of Claim 1, wherein performing the filter control for the ISDN layer 3 message according to the CR value record and the message type and the CR value acquired by analyzing comprises:
discarding (203) a SETUP message and recording (203) the CR value carried by the SETUP message when the ISDN layer 3 message is the SETUP message;
determining (204) whether the CR value carried by a RELEASE COMP message matches a CR value in the CR value record when the ISDN layer 3 message is the RELEASE COMP message; and discarding (205) the RELEASE COMP message and removing (205) the CR value in the CR record if the CR value carried by the RELEASE COMP message matches a CR value in the CR value record; and transmitting (206) the RELEASE COMP message to a network side transparently if the CR value carried by the RELEASE COMP message does not match a CR value in the CR value record;
determining (207) whether the CR value carried by the ISDN layer3 message matches a CR value in the CR value record when the ISDN layer 3 message is not the SETUP message or the RELEASE COMP message; and discarding (208) the ISDN layer 3 message if the CR value carried by the ISDN layer 3 message matches a CR value in the CR value record; and transmitting (206) the ISDN layer 3 message to the network side transparently if the CR value carried by the ISDN layer 3 message does not match a CR value in the CR value record.

3. The method of Claim 2, further comprising:
when the system is not overloaded,
determining (201) whether the CR value carried by the ISDN layer 3 message matches a CR value in the CR value record;
and discarding (201) the ISDN layer 3 message, analyzing (201) the message type of the ISDN layer 3 message before discarding the ISDN layer 3 message if the CR value carried by the ISDN layer 3 message matches a CR value in the CR value record, and further removing (201) the CR value in the CR value record when the ISDN layer 3 message is a RELEASE COMP message;
and transmitting (201) the ISDN layer 3 message to the network side transparently if the CR value carried by the ISDN layer 3 message does not match a CR value in the CR value record.

4. The method of Claim 2, further comprising:
initiating a timer corresponding to the CR value carried by the SETUP message when recording the CR value carried by the SETUP message;
if the RELEASE COMP message arrives at the MG before the timer expires, removing the CR value in the CR value record and resetting the timer;
if no RELEASE COMP message arrives at the MG before the timer expires, removing the CR value in the CR value record.

5. The method of Claim 1, wherein performing the filter control for the ISDN layer 3 message according to the CR value record and the message type and the CR value acquired by analyzing comprises:
discarding (303) a SETUP message when the ISDN layer 3 message is the SETUP message,;
determining (304) whether the CR value carried by a RELEASE message or the RELEASE COMP message matches a CR value in the CR value record when the ISDN layer 3 message is the RELEASE message or the RELEASE COMP message; and removing (305) the CR value in the CR value record, and transmitting (305) the RELEASE message or the RELEASE COMP message to a network side transparently if the CR value carried by the RELEASE message or the RELEASE COMP message matches a CR value in the CR value record; and discarding (306) the RELEASE message or the RELEASE COMP message if the CR value carried by the RELEASE message or the RELEASE COMP message does not match a CR value in the CR value record;
determining (307) whether the CR value carried by the ISDN layer 3 message matches a CR value in the CR value record when the ISDN layer 3 message is not the SETUP message or the RELEASE message or the RELEASE COMP message; and transmitting (308) the ISDN layer 3 message to the network side transparently if the CR value carried by the ISDN layer 3 message matches a CR value in the CR value record; and discarding (306) the ISDN layer 3 message if the CR value carried by the ISDN layer 3 message does not match a CR value in the CR value record.

6. The method of Claim 5, further comprising:
when the system is not overloaded,
transmitting (301) the SETUP message to the network side transparently and recording (301) the CR value carried by the SETUP message when the ISDN layer 3 message is the SETUP message;
determining (301) whether the CR value carried by the ISDN layer 3 message matches a CR value in the CR value record when the ISDN layer 3 message is not the SETUP message; and transmitting (301) the ISDN layer 3 message to the network side transparently if the CR value carried by the ISDN layer 3 message matches a CR value in the CR value record; and discarding (301) the ISDN layer 3 message if the CR value carried by the ISDN layer 3 message does not match a CR value in the CR value record.

7. An apparatus for overload control, **characterized in that** the apparatus comprises:
a message type analyzing unit, configured to analyze a message type of an Integrated Services Digital Network, ISDN, layer 3 message and a Call Reference, CR, value carried by the ISDN layer 3 message;
an overload controlling unit, configured to perform filter control for the ISDN layer 3 message according to a CR value record and the message type and the CR value acquired by the message type analyzing unit.

8. The apparatus of Claim 7, further comprising:
a recording unit, configured to record a CR value or remove a CR value; wherein
the overload controlling unit comprises:
a first sub-unit, configured to discard a SETUP message and inform the recording unit to record the CR value carried by the SETUP message when the ISDN layer 3 message is the SETUP message;
a second sub-unit, configured to determine whether the CR value carried by a RELEASE COMP message matches a CR value recorded by the recording unit in the CR value record when the ISDN layer 3 message is the RELEASE COMP message; and if the CR value carried by the RELEASE COMP message matches a CR value recorded by the recording unit in the CR value record, discard the RELEASE COMP message, and inform the recording unit to remove the CR value in the CR value record; and if the CR value carried by the RELEASE COMP message does not match a CR value recorded by the recording unit in the CR value record, transmit the RELEASE COMP message to a network side transparently;
a third sub-unit, configured to determine whether the CR value carried by the ISDN layer 3 message matches a CR value recorded by the recording unit in the CR value record if the ISDN layer 3 message is not the SETUP message or the RELEASE COMP message; and if the CR value carried by the ISDN layer 3 message matches a CR value recorded by the recording unit in the CR value record, discard the ISDN layer 3 message; and if the CR value carried by the ISDN layer 3 message matches a CR value recorded by the recording unit in the CR value record, transmit the ISDN layer 3 message to the network side transparently.

9. The apparatus of Claim 8, wherein the overload controlling unit further comprises:
a fourth sub-unit, configured to determine whether the CR value carried by the ISDN layer 3 message matches a CR value recorded by the recording unit in the CR value record when the system is not overloaded; and if the CR value carried by the ISDN layer 3 message matches a CR value recorded by the recording unit in the CR value record, discard the ISDN layer 3 message, trigger the message type analyzing unit to analyze the message type of the ISDN layer 3 message before discarding the ISDN layer 3 message, and inform the recording unit to remove the CR value in the CR value record if the ISDN layer 3 message is the RELEASE COMP message; and if the CR value carried by the ISDN layer 3 message does not match a CR value recorded by the recording unit in the CR value record, transmit the ISDN layer 3 message to the network side transparently.

10. The apparatus of Claim 8, further comprising:
a timer, configured to time a CR value recorded by the recording unit in the CR value record, and inform the recording unit to remove the CR value in the CR value record corresponding to the timer after the timer expires;
the recording unit is further configured to initiate the timer corresponding to the CR value carried by the SETUP message while recording the CR value carried by the SETUP message, and remove the timer corresponding to the CR value carried by the SETUP message while removing the CR value from the CR value record.

11. The apparatus of Claim 7, further comprising:
a recording unit, configured to record a CR value or remove a CR value; wherein the overload controlling unit comprises:
a fifth sub-unit, configured to discard a SETUP message if the ISDN layer 3 message is the SETUP message;
a sixth sub-unit, configured to determine whether the CR value carried by a RELEASE message or a RELEASE COMP message matches a CR value recorded by the recording unit in the CR value record if the ISDN layer 3 message is the RELEASE message or the RELEASE COMP message; and if the CR value carried by the RELEASE message or the RELEASE COMP message matches a CR value in the CR value record, inform the recording unit to remove the CR value in the CR value record, and transmit the RELEASE message or the RELEASE COMP message to a network side transparently; and if the CR value carried by the RELEASE message or the RELEASE COMP message does not match a CR value in the CR value record, discard the RELEASE message or the RELEASE COMP message;
a seventh sub-unit, configured to determine whether the CR value carried by the ISDN layer 3 message matches a CR value recorded by the recording unit in the CR value record if the ISDN layer 3 message is not the SETUP message or the RELEASE message or the RELEASE COMP message; and if the CR value carried by the ISDN layer 3 message matches a CR value in the CR value record, transmit the ISDN layer 3 message to the network side transparently; and if the CR value carried by the ISDN layer 3 message does not match a CR value in the CR value record, discard the ISDN layer 3 message.

12. The apparatus of Claim 11, wherein the overload controlling unit comprises:
an eighth sub-unit, configured to transmit the SETUP message to the network side transparently and inform the recording unit to record the CR value carried by the SETUP message if the ISDN layer 3 message is the SETUP message when the system is not overloaded;
a ninth sub-unit, configured to determine whether the CR value carried by the ISDN layer 3 message matches a CR value recorded by the recording unit in the CR value record if the ISDN layer 3 message is not the SETUP message when the system is not overloaded; and if the CR value carried by the ISDN layer 3 message matches a CR value in the CR value record, transmit the ISDN layer 3 message to the network side transparently; and if the CR value carried by the ISDN layer 3 message does not match a CR value in the CR value record, discard the ISDN layer 3 message.

## Patentansprüche

1. Verfahren zur Überlastungssteuerung, **dadurch gekennzeichnet, dass** das Verfahren umfasst, dass
ein Nachrichtentyp einer Integrated Services Digital Network-Schicht 3-Nachricht, ISDN-Schicht 3-Nachricht, die an einem Medien-Gateway, MG, ankommt, und ein Anrufreferenz-Wert, CR-Wert,
der durch die ISDN-Schicht 3-Nachricht getragen wird, analysiert werden (202) (302);
eine Filtersteuerung für die ISDN-Schicht 3-Nachricht gemäß einer CR-Wertaufzeichnung und dem Nachrichtentyp und dem CR-Wert, die durch das Analysieren erlangt werden, durchgeführt wird (203 - 208) (303 - 308).

2. Verfahren nach Anspruch 1,
wobei das Durchführen der Filtersteuerung für die ISDN-Schicht 3-Nachricht gemäß der CR-Wertaufzeichnung und dem Nachrichtentyp und dem CR-Wert, die durch das Analysieren erlangt werden, umfasst, dass
eine SETUP-Nachricht verworfen wird (203) und der durch die SETUP-Nachricht getragene CR-Wert aufgezeichnet wird (203), wenn die ISDN-Schicht 3-Nachricht die SETUP-Nachricht ist;
ermittelt wird (204), ob der durch eine RELEASE COMP-Nachricht getragene CR-Wert mit einem CR-Wert in der CR-Wertaufzeichnung übereinstimmt, wenn die ISDN-Schicht 3-Nachricht die RELEASE COMP-Nachricht ist; und die RELEASE COMP-Nachricht verworfen wird (205) und der CR-Wert in der CR-Aufzeichnung entfernt wird (205), wenn der durch die RELEASE COMP-Nachricht getragene CR-Wert mit einem CR-Wert in der CR-Wertaufzeichnung übereinstimmt; und die RELEASE COMP-Nachricht transparent an eine Netzseite übertragen wird (206), wenn der durch die RELEASE COMP-Nachricht getragene CR-Wert nicht mit einem CR-Wert in der CR-Wertaufzeichnung übereinstimmt;
ermittelt wird (207), ob der durch die ISDN-Schicht 3-Nachricht getragene CR-Wert mit einem CR-Wert in der CR-Wertaufzeichnung übereinstimmt, wenn die ISDN-Schicht 3-Nachricht nicht die SETUP-Nachricht oder die RELEASE COMP-Nachricht ist;
und die ISDN-Schicht 3-Nachricht verworfen wird (208), wenn der durch die ISDN-Schicht 3-Nachricht getragene CR-Wert mit einem CR-Wert in der CR-Wertaufzeichnung übereinstimmt; und die ISDN-Schicht 3-Nachricht transparent an die Netzseite übertragen wird (206), wenn der durch die ISDN-Schicht 3-Nachricht getragene CR-Wert nicht mit einem CR-Wert in der CR-Wertaufzeichnung übereinstimmt.

3. Verfahren nach Anspruch 2, das ferner umfasst, dass
wenn das System nicht überlastet ist,
ermittelt wird (201), ob der durch die ISDN-Schicht 3-Nachricht getragene CR-Wert mit einem CR-Wert in der CR-Wertaufzeichnung übereinstimmt;
und die ISDN-Schicht 3-Nachricht verworfen wird (201), der Nachrichtentyp der ISDN-Schicht 3-Nachricht analysiert wird (201), bevor die ISDN-Schicht 3-Nachricht verworfen wird, wenn der durch die ISDN-Schicht 3-Nachricht getragene CR-Wert mit einem CR-Wert in der CR-Wertaufzeichnung übereinstimmt, und ferner der CR-Wert in der CR-Wertaufzeichnung entfernt wird (201), wenn die ISDN-Schicht 3-Nachricht eine RELEASE COMP-Nachricht ist;
und die ISDN-Schicht 3-Nachricht transparent an die Netzseite übertragen wird (201), wenn der durch die ISDN-Schicht 3-Nachricht getragene CR-Wert nicht mit einem CR-Wert in der CR-Wertaufzeichnung übereinstimmt.

4. Verfahren nach Anspruch 2, das ferner umfasst, dass
ein Timer, der dem durch die SETUP-Nachricht getragenen CR-Wert entspricht, initiiert wird, wenn der durch die SETUP-Nachricht getragene CR-Wert aufgezeichnet wird;
wenn die RELEASE COMP-Nachricht an dem MG ankommt, bevor der Timer abläuft, der CR-Wert in der CR-Wertaufzeichnung entfernt wird und der Timer zurückgesetzt wird;
wenn keine RELEASE COMP-Nachricht an dem MG ankommt, bevor der Timer abläuft, der CR-Wert in der CR-Wertaufzeichnung entfernt wird.

5. Verfahren nach Anspruch 1,
wobei das Durchführen der Filtersteuerung für die ISDN-Schicht 3-Nachricht gemäß der CR-Wertaufzeichnung und dem Nachrichtentyp und dem CR-Wert, die durch das Analysieren erlangt werden, umfasst, dass
eine SETUP-Nachricht verworfen wird (303), wenn die ISDN-Schicht 3-Nachricht die SETUP-Nachricht ist;
ermittelt wird (304), ob der durch eine RELEASE-Nachricht oder die RELEASE COMP-Nachricht getragene CR-Wert mit einem CR-Wert in der CR-Wertaufzeichnung übereinstimmt, wenn die ISDN-Schicht 3-Nachricht die RELEASE-Nachricht oder die RELEASE COMP-Nachricht ist; und der CR-Wert in der CR-Wertaufzeichnung entfernt wird (305) und die RELEASE-Nachricht oder die RELEASE COMP-Nachricht transparent an eine Netzseite übertragen wird (305), wenn der durch die RELEASE-Nachricht oder die RELEASE COMP-Nachricht getragene CR-Wert mit einem CR-Wert in der CR-Wertaufzeichnung übereinstimmt; und die RELEASE-Nachricht oder die RELEASE COMP-Nachricht verworfen wird (306), wenn der durch die RELEASE-Nachricht oder die RELEASE COMP-Nachricht getragene CR-Wert nicht mit einem CR-Wert in der CR-Wertaufzeichnung übereinstimmt;
ermittelt wird (307), ob der durch die ISDN-Schicht 3-Nachricht getragene CR-Wert mit einem CR-Wert in der CR-Wertaufzeichnung übereinstimmt, wenn die ISDN-Schicht 3-Nachricht nicht die SETUP-Nachricht oder die RELEASE-Nachricht oder die RELEASE COMP-Nachricht ist; und die ISDN-Schicht 3-Nachricht transparent an die Netzseite übertragen wird (308), wenn der durch die ISDN-Schicht 3-Nachricht getragene CR-Wert mit einem CR-Wert in der CR-Wertaufzeichnung übereinstimmt; und die ISDN-Schicht 3-Nachricht verworfen wird (306), wenn der durch die ISDN-Schicht 3-Nachricht getragene CR-Wert nicht mit einem CR-Wert in der CR-Wertaufzeichnung übereinstimmt.

6. Verfahren nach Anspruch 5, das ferner umfasst, dass
wenn das System nicht überlastet ist,
die SETUP-Nachricht transparent an die Netzseite übertragen wird (301) und der durch die SETUP-Nachricht getragene CR-Wert aufgezeichnet wird (301), wenn die ISDN-Schicht 3-Nachricht die SETUP-Nachricht ist;
ermittelt wird (301), ob der durch die ISDN-Schicht 3-Nachricht getragene CR-Wert mit einem CR-Wert in der CR-Wertaufzeichnung übereinstimmt, wenn die ISDN-Schicht 3-Nachricht nicht die SETUP-Nachricht ist; und die ISDN-Schicht 3-Nachricht transparent an die Netzseite übertragen wird (301), wenn der durch die ISDN-Schicht 3-Nachricht getragene CR-Wert mit einem CR-Wert in der CR-Wertaufzeichnung übereinstimmt; und die ISDN-Schicht 3-Nachricht verworfen wird (301), wenn der durch die ISDN-Schicht 3-Nachricht getragene CR-Wert nicht mit einem CR-Wert in der CR-Wertaufzeichnung übereinstimmt.

7. Vorrichtung für eine Überlastungssteuerung, **dadurch gekennzeichnet, dass** die Vorrichtung umfasst:
eine Nachrichtentyp-Analyseeinheit, die ausgestaltet ist, um einen Nachrichtentyp einer Integrated Services Digital Network-Schicht 3-Nachricht, ISDN-Schicht 3-Nachricht, und einen Anrufreferenz-Wert, CR-Wert, der durch die ISDN-Schicht 3-Nachricht getragen ist, zu analysieren;
eine Überlastungssteuereinheit, die ausgestaltet ist, um eine Filtersteuerung für die ISDN-Schicht 3-Nachricht gemäß einer CR-Wertaufzeichnung und dem Nachrichtentyp und dem CR-Wert, die durch die Nachrichtentyp-Analyseeinheit erlangt werden, durchzuführen.

8. Vorrichtung nach Anspruch 7, ferner umfassend
eine Aufzeichnungseinheit, die ausgestaltet ist, um einen CR-Wert aufzuzeichnen oder einen CR-Wert zu entfernen; wobei
die Überlastungssteuereinheit umfasst:
eine erste Subeinheit, die ausgestaltet ist, um eine SETUP-Nachricht zu verwerfen und die Aufzeichnungseinheit zu informieren, um den durch die SETUP-Nachricht getragenen CR-Wert aufzuzeichnen, wenn die ISDN-Schicht 3-Nachricht die SETUP-Nachricht ist;
eine zweite Subeinheit, die ausgestaltet ist, um zu ermitteln, ob der durch eine RELEASE COMP-Nachricht getragene CR-Wert mit einem durch die Aufzeichnungseinheit in der CR-Wertaufzeichnung aufgezeichneten CR-Wert übereinstimmt, wenn die ISDN-Schicht 3-Nachricht die RELEASE COMP-Nachricht ist; und wenn der durch die RELEASE COMP-Nachricht getragene CR-Wert mit einem durch die Aufzeichnungseinheit in der CR-Wertaufzeichnung aufgezeichneten CR-Wert übereinstimmt, die RELEASE COMP-Nachricht zu verwerfen und die Aufzeichnungseinheit zu informieren, um den CR-Wert in der CR-Wertaufzeichnung zu entfernen; und wenn der durch die RELEASE COMP-Nachricht getragene CR-Wert nicht mit einem durch die Aufzeichnungseinheit in der CR-Wertaufzeichnung aufgezeichneten CR-Wert übereinstimmt, die RELEASE COMP-Nachricht transparent an eine Netzseite zu übertragen;
eine dritte Subeinheit, die ausgestaltet ist, um zu ermitteln, ob der durch die ISDN-Schicht 3-Nachricht getragene CR-Wert mit einem durch die Aufzeichnungseinheit in der CR-Wertaufzeichnung aufgezeichneten CR-Wert übereinstimmt, wenn die ISDN-Schicht 3-Nachricht nicht die SETUP-Nachricht oder die RELEASE COMP-Nachricht ist; und wenn der durch die ISDN-Schicht 3-Nachricht getragene CR-Wert mit einem durch die Aufzeichnungseinheit in der CR-Wertaufzeichnung aufgezeichneten CR-Wert übereinstimmt, die ISDN-Schicht 3-Nachricht zu verwerfen; und wenn der durch die ISDN-Schicht 3-Nachricht getragene CR-Wert mit einem durch die Aufzeichnungseinheit in der CR-Wertaufzeichnung aufgezeichneten CR-Wert übereinstimmt, die ISDN-Schicht 3-Nachricht transparent an die Netzseite zu übertragen.

9. Vorrichtung nach Anspruch 8, wobei die Überlastungssteuereinheit ferner umfasst:
eine vierte Subeinheit, die ausgestaltet ist, um zu ermitteln, ob der durch die ISDN-Schicht 3-Nachricht getragene CR-Wert mit einem durch die Aufzeichnungseinheit in der CR-Wertaufzeichnung aufgezeichneten CR-Wert übereinstimmt, wenn das System nicht überlastet ist; und wenn der durch die ISDN-Schicht 3-Nachricht getragene CR-Wert mit einem durch die Aufzeichnungseinheit in der CR-Wertaufzeichnung aufgezeichneten CR-Wert übereinstimmt, die ISDN-Schicht 3-Nachricht zu verwerfen, die Nachrichtentyp-Analyseeinheit auszulösen, um den Nachrichtentyp der ISDN-Schicht 3-Nachricht zu analysieren, bevor die ISDN-Schicht 3-Nachricht verworfen wird, und die Aufzeichnungseinheit zu informieren, um den CR-Wert in der CR-Wertaufzeichnung zu entfernen, wenn die ISDN-Schicht 3-Nachricht die RELEASE COMP-Nachricht ist; und wenn der durch die ISDN-Schicht 3-Nachricht getragene CR-Wert nicht mit einem durch die Aufzeichnungseinheit in der CR-Wertaufzeichnung aufgezeichneten CR-Wert übereinstimmt, die ISDN-Schicht 3-Nachricht transparent an die Netzseite zu übertragen.

10. Vorrichtung nach Anspruch 8, ferner umfassend:
einen Timer, der ausgestaltet ist, um einen durch die Aufzeichnungseinheit in der CR-Wertaufzeichnung aufgezeichneten CR-Wert zeitlich einzustellen und die Aufzeichnungseinheit zu informieren, um den CR-Wert in der CR-Wertaufzeichnung, der dem Timer entspricht, nach dem Ablauf des Timers zu entfernen;
wobei die Aufzeichnungseinheit ferner ausgestaltet ist, um den Timer, der dem durch die SETUP-Nachricht getragenen CR-Wert entspricht, zu initiieren, während der durch die SETUP-Nachricht getragene CR-Wert aufgezeichnet wird, und den Timer, der dem durch die SETUP-Nachricht getragenen CR-Wert entspricht, zu entfernen, während der CR-Wert von der CR-Wertaufzeichnung entfernt wird.

11. Vorrichtung nach Anspruch 7, ferner umfassend:
eine Aufzeichnungseinheit, die ausgestaltet ist, um einen CR-Wert aufzuzeichnen oder einen CR-Wert zu entfernen; wobei die Überlastungssteuereinheit umfasst:
eine fünfte Subeinheit, die ausgestaltet ist, um eine SETUP-Nachricht zu verwerfen, wenn die ISDN-Schicht 3-Nachricht die SETUP-Nachricht ist;
eine sechste Subeinheit, die ausgestaltet ist, um zu ermitteln, ob der durch eine RELEASE-Nachricht oder eine RELEASE COMP-Nachricht getragene CR-Wert mit einem durch die Aufzeichnungseinheit in der CR-Wertaufzeichnung aufgezeichneten CR-Wert übereinstimmt, wenn die ISDN-Schicht 3-Nachricht die RELEASE-Nachricht oder die RELEASE COMP-Nachricht ist; und wenn der durch die RELEASE-Nachricht oder die RELEASE COMP-Nachricht getragene CR-Wert mit einem CR-Wert in der CR-Wertaufzeichnung übereinstimmt, die Aufzeichnungseinheit zu informieren, um den CR-Wert in der CR-Wertaufzeichnung zu entfernen, und die RELEASE-Nachricht oder die RELEASE COMP-Nachricht transparent an eine Netzseite übertragen; und wenn der durch die RELEASE-Nachricht oder die RELEASE COMP-Nachricht getragene CR-Wert nicht mit einem CR-Wert in der CR-Wertaufzeichnung übereinstimmt, die RELEASE-Nachricht oder die RELEASE COMP-Nachricht zu verwerfen;
eine siebte Subeinheit, die ausgestaltet ist, um zu ermitteln, ob der durch die ISDN-Schicht 3-Nachricht getragene CR-Wert mit einem durch die Aufzeichnungseinheit in der CR-Wertaufzeichnung aufgezeichneten CR-Wert übereinstimmt, wenn die ISDN-Schicht 3-Nachricht nicht die SETUP-Nachricht oder die RELEASE-Nachricht oder die RELEASE COMP-Nachricht ist; und wenn der durch die ISDN-Schicht 3-Nachricht getragene CR-Wert mit einem CR-Wert in der CR-Wertaufzeichnung übereinstimmt, die ISDN-Schicht 3-Nachricht transparent an die Netzseite zu übertragen; und wenn der durch die ISDN-Schicht 3-Nachricht getragene CR-Wert nicht mit einem CR-Wert in der CR-Wertaufzeichnung übereinstimmt, die ISDN-Schicht 3-Nachricht zu verwerfen.

12. Vorrichtung nach Anspruch 11, wobei die Überlastungssteuereinheit umfasst:
eine achte Subeinheit, die ausgestaltet ist, um die SETUP-Nachricht transparent an die Netzseite zu übertragen und die Aufzeichnungseinheit zu informieren, um den durch die SETUP-Nachricht getragenen CR-Wert aufzuzeichnen, wenn die ISDN-Schicht 3-Nachricht die SETUP-Nachricht ist, wenn das System nicht überlastet ist;
eine neunte Subeinheit, die ausgestaltet ist, um zu ermitteln, ob der durch die ISDN-Schicht 3-Nachricht getragene CR-Wert mit einem durch die Aufzeichnungseinheit in der CR-Wertaufzeichnung aufgezeichneten CR-Wert übereinstimmt, wenn die ISDN-Schicht 3-Nachricht nicht die SETUP-Nachricht ist, wenn das System nicht überlastet ist; und wenn der durch die ISDN-Schicht 3-Nachricht getragene CR-Wert mit einem CR-Wert in der CR-Wertaufzeichnung übereinstimmt, die ISDN-Schicht 3-Nachricht transparent an die Netzseite zu übertragen; und wenn der durch die ISDN-Schicht 3-Nachricht getragene CR-Wert nicht mit einem CR-Wert in der CR-Wertaufzeichnung übereinstimmt, die ISDN-Schicht 3-Nachricht zu verwerfen.

## Revendications

1. Procédé de commande de surcharge, **caractérisé en ce que** le procédé comprend :
l'analyse (202) (302) d'un type de message d'un message de couche 3 de réseau numérique à intégration de services, RNIS, arrivant au niveau d'une passerelle entre média, MG (pour "Media Gateway"), et d'une valeur de référence d'appel, CR (pour "Call Reference"), transportée par le message de couche 3 de RNIS ;
l'exécution (203 à 208) (303 à 308) d'une commande de filtre pour le message de couche 3 de RNIS en fonction d'un enregistrement de valeur de CR et du type de message et de la valeur de CR acquise par analyse.

2. Procédé selon la revendication 1, dans lequel l'exécution de la commande de filtre pour le message de couche 3 de RNIS en fonction de l'enregistrement de valeur de CR et du type de message et de la valeur de CR acquise par analyse comprend :
l'élimination (203) d'un message de SETUP et l'enregistrement (203) de la valeur de CR transportée par le message de SETUP lorsque le message de couche 3 de RNIS est le message de SETUP ;
la détermination (204) de ce que la valeur de CR transportée par un message de RELEASE COMP concorde ou non avec une valeur de CR de l'enregistrement de valeur de CR lorsque le message de couche 3 de RNIS est le message de RELEASE COMP ; et l'élimination (205) du message de RELEASE COMP et la suppression (205) de la valeur de CR dans l'enregistrement de CR si la valeur de CR transportée par le message de RELEASE COMP concorde avec une valeur de CR dans l'enregistrement de valeur de CR ; et la transmission (206) du message de RELEASE COMP au côté réseau de manière transparente si la valeur de CR transportée par le message de RELEASE COMP ne concorde pas avec une valeur de CR dans l'enregistrement de valeur de CR ;
la détermination (207) de ce que la valeur de CR transportée par le message de couche 3 de RNIS concorde ou non avec une valeur de CR dans l'enregistrement de valeur de CR lorsque le message de couche 3 de RNIS n'est pas le message de SETUP ou le message de RELEASE COMP ; et l'élimination (208) du message de couche 3 de RNIS si la valeur de CR transportée par le message de couche 3 de RNIS concorde avec une valeur de CR dans l'enregistrement de valeur de CR ; et la transmission (206) du message de couche 3 de RNIS au côté réseau de manière transparente si la valeur de CR transportée par le message de couche 3 de RNIS ne concorde pas avec une valeur de CR dans l'enregistrement de valeur de CR.

3. Procédé selon la revendication 2, comprenant en outre :
lorsque le système n'est pas surchargé,
la détermination (201) de ce que la valeur de CR transportée par le message de couche 3 de RNIS concorde ou non avec une valeur de CR dans l'enregistrement de valeur de CR ;
et l'élimination (201) du message de couche 3 de RNIS, l'analyse (201) du type de message du message de couche 3 de RNIS avant l'élimination du message de couche 3 de RNIS si la valeur de CR transportée par le message de couche 3 de RNIS concorde avec une valeur de CR dans l'enregistrement de valeur de CR, et en outre la suppression (201) de la valeur de CR dans l'enregistrement de valeur de CR lorsque le message de couche 3 de RNIS est un message de RELEASE COMP ;
et la transmission (201) du message de couche 3 de RNIS au côté réseau de manière transparente si la valeur de CR transportée par le message de couche 3 de RNIS ne concorde pas avec une valeur de CR dans l'enregistrement de valeur de CR.

4. Procédé selon la revendication 2, comprenant en outre :
l'initialisation d'un temporisateur correspondant à la valeur de CR transportée par le message de SETUP lors de l'enregistrement de la valeur de CR transportée par le message de SETUP ;
si le message de RELEASE COMP arrive à la MG avant que le temporisateur expire, la suppression de la valeur de CR dans l'enregistrement de valeur de CR et la remise à zéro du temporisateur ;
si aucun message de RELEASE COMP n'arrive à la MG avant que le temporisateur n'expire, la suppression de la valeur de CR dans l'enregistrement de valeur de CR.

5. Procédé selon la revendication 1, dans lequel l'exécution de la commande de filtre pour le message de couche 3 de RNIS en fonction de l'enregistrement de valeur de CR et du type de message et de la valeur de CR acquise par analyse comprend :
l'élimination (303) d'un message de SETUP lorsque le message de couche 3 de RNIS et le message de SETUP ;
la détermination (304) de ce que la valeur de CR transportée par un message de RELEASE ou le message de RELEASE COMP concorde ou non avec une valeur de CR de l'enregistrement de valeur de CR lorsque le message de couche 3 de RNIS est le message de RELEASE ou le message de RELEASE COMP ; et la suppression (305) de la valeur de CR dans l'enregistrement de valeur CR, et la transmission (305) du message de RELEASE ou du message de RELEASE COMP au côté réseau de manière transparente si la valeur de CR transportée par le message de RELEASE ou le message de RELEASE COMP concorde avec une valeur de CR dans l'enregistrement de valeur de CR ; et l'élimination (306) du message de RELEASE ou du message de RELEASE COMP si la valeur de CR transportée par le message de RELEASE ou par le message de RELEASE COMP ne concorde pas avec une valeur de CR dans l'enregistrement de valeur de CR ;
la détermination (307) de ce que la valeur de CR transportée par le message de couche 3 de RNIS concorde ou non avec une valeur de CR dans l'enregistrement de valeur de CR lorsque le message de couche 3 de RNIS n'est pas le message de SETUP ou le message de RELEASE ou le message de RELEASE COMP ; et la transmission (308) du message de couche 3 de RNIS au côté réseau de manière transparente si la valeur de CR transportée par le message de couche 3 de RNIS concorde avec une valeur de CR dans l'enregistrement de valeur de CR ; et l'élimination (306) du message de couche 3 de RNIS si la valeur de CR transportée par le message de couche 3 de RNIS ne concorde pas avec une valeur de CR dans l'enregistrement de valeur de CR.

6. Procédé selon la revendication 5, comprenant en outre :
lorsque le système n'est pas surchargé,
la transmission (301) du message de SETUP au côté réseau de manière transparente et l'enregistrement (301) de la valeur de CR transportée par le message de SETUP lorsque le message de couche 3 de RNIS est le message de SETUP ;
la détermination (301) de ce que la valeur de CR transportée par le message de couche 3 de RNIS concorde ou non avec une valeur de CR de l'enregistrement de valeur de CR lorsque le message de couche 3 de RNIS n'est pas le message de SETUP ; et la transmission (301) du message de couche 3 de RNIS au côté réseau de manière transparente si la valeur de CR transportée par le message de couche 3 de RNIS concorde avec une valeur de CR dans l'enregistrement de valeur de CR ; et l'élimination (301) du message de couche 3 de RNIS si la valeur de CR transportée par le message de couche 3 de RNIS ne concorde pas avec une valeur de CR dans l'enregistrement de valeur de CR.

7. Dispositif de commande de surcharge, **caractérisé en ce que** le dispositif comprend :
une unité d'analyse de type de message, configurée pour analyser un type de message d'un message de couche 3 de réseau numérique à intégration de services, RNIS, et une valeur de référence d'appel, CR, transportée par le message de couche 3 de RNIS ;
unité de commande de surcharge, configurée pour effectuer une commande de filtre pour le message de couche 3 de RNIS en fonction d'un enregistrement de valeur de CR et du type de message et de la valeur de CR acquise par l'unité d'analyse de type de message.

8. Dispositif selon la revendication 7, comprenant en outre :
une unité d'enregistrement, configurée pour enregistrer une valeur de CR ou pour supprimer une valeur de CR ;
dans lequel l'unité de commande de surcharge comprend :
une première sous-unité, configurée pour éliminer un message de SETUP et pour informer l'unité d'enregistrement pour enregistrer la valeur de CR transportée par le message de SETUP lorsque le message de couche 3 de RNIS est le message de SETUP ;
une deuxième sous-unité, configurée pour déterminer si la valeur de CR transportée par un message de RELEASE COMP concorde avec une valeur de CR enregistrée par l'unité d'enregistrement dans l'enregistrement de valeur de CR lorsque le message de couche 3 de RNIS est le message de RELEASE COMP ; et si la valeur de CR transportée par le message de RELEASE COMP concorde avec une valeur de CR enregistrée par l'unité d'enregistrement dans l'enregistrement de valeur de CR, pour éliminer le message de RELEASE COMP, et informer l'unité d'enregistrement pour supprimer la valeur de CR dans l'enregistrement de valeur de CR ; et si la valeur de CR transportée par le message de RELEASE COMP ne concorde pas avec une valeur de CR enregistrée par l'unité d'enregistrement dans l'enregistrement de valeur de CR, pour transmettre le message de RELEASE COMP au côté réseau de manière transparente ;
une troisième soude-unité, configurée pour déterminer si la valeur de CR transportée par le message de couche 3 de RNIS concorde avec une valeur de CR enregistrée par l'unité d'enregistrement dans l'enregistrement de valeur de CR si le message de couche 3 de RNIS n'est pas le message de SETUP ou le message de RELEASE COMP ; et si la valeur de CR transportée par le message de couche 3 de RNIS concorde avec une valeur de CR enregistrée par l'unité d'enregistrement dans l'enregistrement de valeur de CR, pour éliminer le message de couche 3 de RNIS ; et si la valeur de CR transportée par le message de couche 3 de RNIS concorde avec une valeur de CR enregistrée par l'unité d'enregistrement dans l'enregistrement de valeur de CR, pour transmettre le message de couche 3 de RNIS au côté réseau de manière transparente.

9. Dispositif selon la revendication 8, dans lequel l'unité de commande de surcharge comprend en outre :
une quatrième sous-unité, configurée pour déterminer si la valeur de CR transportée par le message de couche 3 de RNIS concorde avec une valeur de CR enregistrée par l'unité d'enregistrement dans l'enregistrement de valeur de CR lorsque le système n'est pas surchargé ; et si la valeur de CR transportée par le message de couche 3 de RNIS concorde avec une valeur de CR enregistrée par l'unité d'enregistrement dans l'enregistrement de valeur de CR, pour éliminer le message de couche 3 de RNIS, pour déclencher l'unité d'analyse de type de message pour analyser le type de message du message de couche 3 de RNIS avant d'éliminer le message de couche 3 de RNIS, et pour informer l'unité d'enregistrement pour supprimer la valeur de CR dans l'enregistrement de valeur de CR si le message de couche 3 de RNIS est le message de RELEASE COMP ; et si la valeur de CR transportée par le message de couche 3 de RNIS ne concorde pas avec une valeur de CR enregistrée par l'unité d'enregistrement dans l'enregistrement de valeur de CR, pour transmettre le message de couche 3 de RNIS au côté réseau de manière transparente.

10. Dispositif selon la revendication 8, comprenant en outre :
un temporisateur, configuré pour chronométrer une valeur de CR enregistrée par l'unité d'enregistrement dans l'enregistrement de valeur de CR, et pour informer l'unité d'enregistrement pour supprimer la valeur de CR dans l'enregistrement de valeur de CR correspondant au temporisateur après que le temporisateur a expiré ;
dans lequel l'unité d'enregistrement est en outre configurée pour initialiser le temporisateur correspondant à la valeur de CR transportée par le message de SETUP lors de l'enregistrement de la valeur de CR transportée par le message de SETUP, et pour supprimer le temporisateur correspondant à la valeur de CR transportée par le message de SETUP lors de la suppression de la valeur de CR de l'enregistrement de valeur de CR.

11. Dispositif selon la revendication 7, comprenant en outre :
une unité d'enregistrement, configurée pour enregistrer une valeur de CR ou pour supprimer une valeur de CR ; dans lequel l'unité de commande de surcharge comprend :
une cinquième sous-unité, configurée pour éliminer un message de SETUP si le message de couche 3 de RNIS est le message de SETUP ;
une sixième sous-unité, configurée pour déterminer si la valeur de CR transportée par un message de RELEASE ou par un message de RELEASE COMP concorde avec une valeur de CR enregistrée par l'unité d'enregistrement dans l'enregistrement de valeur de CR si le message de couche 3 de RNIS est le message de RELEASE ou le message de RELEASE COMP ; et si la valeur de CR transportée par le message de RELEASE ou par le message de RELEASE COMP concorde avec une valeur de CR dans l'enregistrement de valeur de CR, pour informer l'unité d'enregistrement pour supprimer la valeur de CR dans l'enregistrement de valeur de CR, et pour transmettre le message de RELEASE ou le message de RELEASE COMP au côté réseau de manière transparente ; et si la valeur de CR transportée par le message de RELEASE ou par le message de RELEASE COMP ne concorde pas avec une valeur de CR dans l'enregistrement de valeur de CR, pour éliminer le message de RELEASE ou le message de RELEASE COMP ;
une septième sous-unité, configurée pour déterminer si la valeur de CR transportée par le message de couche 3 de RNIS concorde avec une valeur de CR enregistrée par l'unité d'enregistrement dans l'enregistrement de valeur de CR si le message de couche 3 de RNIS n'est pas le message de SETUP ou le message de RELEASE ou le message de RELEASE COMP ; et si la valeur de CR transportée par le message de couche 3 de RNIS concorde avec une valeur de CR dans l'enregistrement de valeur de CR, pour transmettre le message de couche 3 de RNIS au côté réseau de manière transparente ; et si la valeur de CR transportée par le message de couche 3 de RNIS ne concorde pas avec une valeur de CR dans l'enregistrement de valeur de CR, pour éliminer le message de couche 3 de RNIS.

12. Dispositif selon la revendication 11, dans lequel l'unité de commande de surcharge comprend :
une huitième sous-unité, configurée pour transmettre le message de SETUP au côté réseau de manière transparente et pour informer l'unité d'enregistrement pour enregistrer la valeur de CR transportée par le message de SETUP si le message de couche 3 de RNIS est le message de SETUP lorsque le système n'est pas surchargé ;
une neuvième sous-unité, configurée pour déterminer si la valeur de CR transportée par le message de couche 3 de RNIS concorde avec une valeur de CR enregistrée par l'unité d'enregistrement dans l'enregistrement de valeur de CR si le message de couche 3 de RNIS n'est pas le message de SETUP lorsque le système n'est pas surchargé ; et si la valeur de CR transportée par le message de couche 3 de RNIS concorde avec une valeur de CR dans l'enregistrement de valeur de CR, pour transmettre le message de couche 3 de RNIS au côté réseau de manière transparente ; et si la valeur de CR transportée par le message de couche 3 de RNIS ne concorde pas avec une valeur de CR dans l'enregistrement de valeur de CR, pour éliminer le message de couche 3 de RNIS.
